**Europäisches Patentamt**

**European Patent Office**

**Office européen des brevets**

(19)

(11) Publication number: **0 252 890**

**A1**

(12)

# EUROPEAN PATENT APPLICATION

(21) Application number: **87850214.5**

(22) Date of filing: **01.07.87**

(51) Int. Cl.³: **F 16 K 15/14**
**A 62 B 18/10**

(30) Priority: **03.07.86 SE 8602961**

(43) Date of publication of application:
**13.01.88 Bulletin 88/2**

(84) Designated Contracting States:
**AT BE CH DE ES FR GB GR IT LI LU NL**

(71) Applicant: **Horda Gummifabrik AB**
**Horda**
**S-330 17 Rydaholm(SE)**

(72) Inventor: **Söderberg, Valter**
**Torngatan 12**
**S-334 00 Anderstorp(SE)**

(74) Representative: **Barnieske, Hans Wolfgang**
**c/o H.W. Barnieske Patentbyrå AB P.O. Box 25**
**Turingegatan 26**
**S-151 21 Södertälje 1(SE)**

(54) Valve device.

(57) The present invention relates to an exhalation and/or in-halation valve device for protective masks, consisting of a valve seat (1) with a valve membrane (11) of compression-moulded rubber cooperating with the valve seat. The membrane (11) is secured to the valve seat (1) close to its edge and opens initially at the edge portion of the member located opposite the attachment, thus resulting in low opening resistance, directional influence on the air flowing through and reduced suppression and distortion of speech.

FIG. 2

EP 0 252 890 A1

1

The present invention relates to a valve device particularly intended for use as exhalation and/or inhalation valve in protective masks, consisting of a valve seat with a through-flow opening, a border surrounding the opening and an attachment portion for a valve membrane, and also a valve membrane cooperating with the valve seat, said membrane being in sealing contact with the valve seat in closed position.

Breathing valves for use in protective masks are already known and those most frequently used are those known as disc valves in which a valve membrane of compression-moulded rubber is fitted centrally in a seat consisting of an annular border, a centre part and support ribs running therebetween.

One drawback of the known valve design is that it gives rise to relatively great inhalation resistance, an extremely negative factor, which contributes to the use of the protective mask being experienced as unpleasant and performance being undesirably reduced during work while using the protective masks.

Another drawback is entailed by the whole peripheral portion of the valve membrane being involved at opening and closing. There is a certain delay in opening, since an initial resistance must be overcome due to the elasticity of the compression-moulded membrane utilized to achieve the sealing effect. Furthermore, the air flow is distributed around the entire periphery of the membrane, thus causing speech to be muffled and distorted if the valve is being used for exhalation.

The object of the present invention is therefore to produce a valve device with low opening resistance which opens quickly and which gives minimal suppression and distortion of speech.

This is achieved by means of the valve device according to the present invention, wherein the attachment portion in the valve seat is formed in conjunction with the border and that the valve membrane is secured to the attachment portion close to its edge.

Since the valve membrane is attached at an edge portion and initially opens at the opposite edge where the resistance is least, the opening resistance will be considerably less than in the known disc valve devices with the valve membrane attached centrally. Furthermore, a directional influence is obtained on the air flowing through the valve device which, when used as an exhalation valve, results in better sound reproduction and, when used as inhalation valve, can be utilized to guide the air flow across the vision glass in the protective mask, thus preventing misting over. Another advantage is that the valve device is not limited to being circular in shape but may be oval or any other shape which will further decrease opening resistance, improve reproduction of speech, etc.

According to one embodiment of the invention the attachment portion of the valve seat is produced inside and integrally with the border and is provided with attachment means for the valve membrane. Support ribs can then suitably be arranged between the attachment portion and the opposite point on the border, partly to reinforce the valve seat and partly to prevent the valve membrane from being drawn in through the valve seat.

Further characteristics and advantages of the valve device according to the invention will be revealed in the following detailed description, with reference to the accompanying drawings in which

Figure 1   shows a view from above of a valve seat in the valve device according to the present invention,

Figure 2   shows a view from above of the valve device according to the invention, with the valve membrane in place, and

Figure 3   shows the same view as in Figure 2, but with the valve membrane folded back.

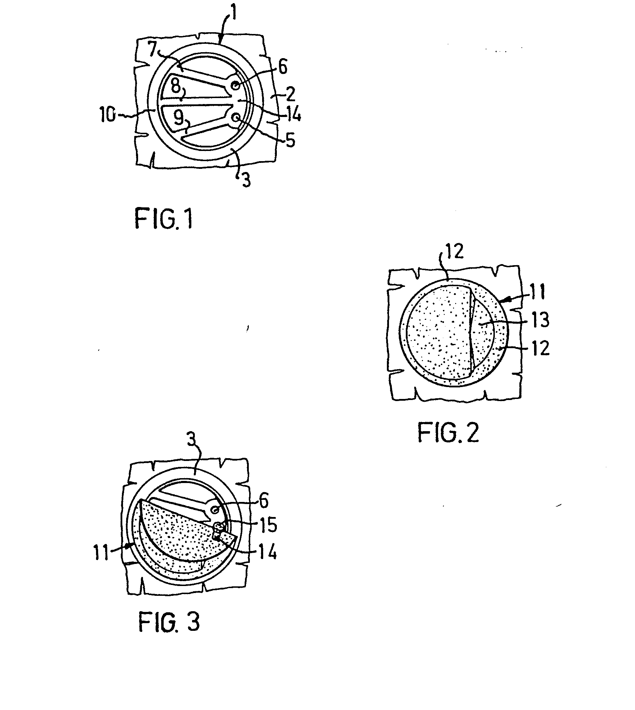

Figure 1 shows a valve seat 1 for a valve device according to the present invention fitted into any device, designated 2. The valve seat consists of a border 3, providing the sealing surface for a valve membrane. Integrally with and inside the border 3 is an attachment portion 4 with attachment means in the form of openings 5, 6 for the valve membrane. Between the attachment portion 4 and the opposite point on the border 3 are support ribs 7, 8 and 9, suitably arranged furthest apart at the point 10 opposite the attachment portion, as shown in the figure. The purpose of the ribs is to reinforce the valve seat and to prevent the valve membrane from being drawn through the opening.

In the embodiment shown the valve seat is circular, but other configurations are of course feasible. The opening resistance can be further reduced by making the valve seat oval or elongate. Furthermore the number of support ribs can be varied, only one or two ribs being used, or several thin support ribs, for instance.

The seat may also be made of a plastic material. However, it must fulfil the high requirements for protective masks, i.e. the material shall be non-flammable, self-extinguishing, it shall withstand high temperatures and be resistant to chemical agents. The seat may also be made of aluminium with a suitable surface treatment like anodization, or of some other metal.

According to an alternative embodiment the valve may be provided with attachment means for the valve membrane in the form of studs to be passed through corresponding openings in the valve membrane.

Figures 2 and 3 show views from above of the valve device according to the invention, with a valve membrane 11 fitted in the valve seat. The valve membrane is preferably made of compression-moulded rubber which fulfils the above-mentioned high requirements placed on protective masks. In compression-moulded state the rubber material is resilient and if the membrane is given a bevelled edge 12 it will seal against the border 3 of the valve seat in closed position, irrespective of the position assumed by the valve device. Furthermore, the rubber material is so light that its weight will not open the valve unless influenced.

In the embodiment shown the attachment portion 13 of the valve membrane 11 has been given increased thickness to allow attachment means in the form of studs 14 to be moulded on, see Figure 3. Even if the valve membrane is provided with holes through which studs on the attachment portion of the valve seat shall be passed, the valve member may be made thicker at the attachment portion to strengthen the attachment area of the membrane.

The attachment means shall be located inside the periphery of the valve member to ensure a tight seal. In the embodiment shown, the attachment studs 14 are provided with upsets 15 which, when the valve is assembled, are pressed through the openings 5, 6 in the attachment part 3 of the valve seat. Making the distance between the upsets 15 and the lower side of the valve membrane shorter than the thickness of the valve seat material will ensure a good seal between valve membrane and valve seat. This, in combination with the attachment means being located inside the bevelled sealing edge 12 of the valve membrane will guarantee absolute tightness between valve seat and valve membrane.

The valve device according to the invention thus offers quicker opening than with the disc valves most frequently used in conventional protective masks. Lower opening resistance is obtained while still retaining the quick-closing feature of the disc valves. Furthermore, as mentioned above, a directional influence is also obtained on the air flowing through, while at the same time muffling and distortion of speech is reduced.

In comparative tests between the valve device according to the invention and a peripherally fitted valve membrane and valve devices having centrally fitted valve membranes, but otherwise having through-openings and valve membrane of the same size, the valve device according to the invention was found to offer negligible breathing resistance in comparison with the disc valve and considerably better speech reproduction.

Other methods for attaching the valve membrane to the seat, besides the design solutions proposed above, may of course be used without deviating from the inventive concept. The membrane might, for instance, be attached to the valve seat by moulding, clamping, etc., although the embodiments described above are preferred.

Claims

1. A valve device, particularly intended for use as exhalation and/or inhalation valve in protective masks, consisting of a valve seat with a through-flow opening, a border surrounding the opening and an attachment portion for a valve membrane, and also a valve membrane cooperating with the valve seat, said membrane being in sealing contact with the valve seat in closed position, w h e r e i n the attachment portion (4) in the valve seat is formed in conjunction with the border (3) and that the valve membrane (11) is connected to the attachment portion (4) close to its edge.

2. A valve device as claimed in claim 1, w h e r e - i n the attachment portion (4) is formed integrally with and inside the border (3) and that the attachment portion is provided with attachment means for the valve membrane (11).

3. A valve device as claimed in claim 2, w h e r e - i n at least one support rib (7, 8, 9) is arranged between the attachment portion (4) and the opposite part of the border (at 10).

4. A valve device as claimed in claim 2, w h e r e - i n the attachment means comprise at least one hole (5, 6) for carrying attachment studs (14) on the valve membrane (11).

5. A valve device as claimed in claim 4, w h e r e - i n attachment studs (14) of the valve membrane are provided with upsets (15) to be passed through the holes (5, 6) in the attachment portion (4) and abut sealingly against the lower side of the attachment portion.

6. A valve device as claimed in claim 2, w h e r e - i n the attachment portion (4) of the valve seat is provided with attachment means in the form of at least one stud designed to be passed through holes arranged in the valve membrane (11).

7. A valve device as claimed in claims 1 - 6, w h e r e i n the valve membrane (11) is provided with an attachment portion (13) of increased thickness to offer firmness in the attachment area, and a bevelled sealing edge (12) to reinforce the edge area of the membrane, thus providing a better seal.

0252890

1/1

FIG.1

FIG.2

FIG. 3

## European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | DE-B-1 213 249 (DRÄGERWERK) <br> * Whole document * | 1-4,6 | F 16 K 15/14 <br> A 62 B 18/10 |
| X | GB-A-2 109 092 (VORWERK & CO.) <br> * Abstract * | 1 | |
| A | DE-A-1 213 251 (THE ELECTRIC STORAGE BATTERY CO.) | | |
| A | US-A-3 628 565 (PHILCO-FORD CORP.) | | |
| A | US-A-3 295 547 (D. SCARAMUCCI) | | |

TECHNICAL FIELDS SEARCHED (Int Cl 4)

F 16 K 15/00
A 62 B 18/00

The present search report has been drawn up for all claims

| Place of search | Date of completion of the search | Examiner |
|---|---|---|
| THE HAGUE | 08-10-1987 | DE SMET F.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503 03 82